(19) Europäisches Patentamt
European Patent Office
Office européen des brevets

(11) Publication number: **0 311 040 B1**

(12) # EUROPEAN PATENT SPECIFICATION

(45) Date of publication of patent specification: **27.04.94** (51) Int. Cl.$^5$: **C08G 75/02**

(21) Application number: **88116470.1**

(22) Date of filing: **05.10.88**

(54) **Method to recover poly(arylene sulfide)s with vaporized liquids.**

(30) Priority: **05.10.87 US 104613**

(43) Date of publication of application:
**12.04.89 Bulletin 89/15**

(45) Publication of the grant of the patent:
**27.04.94 Bulletin 94/17**

(84) Designated Contracting States:
**AT BE DE ES FR GB IT NL**

(56) References cited:
**US-A- 3 839 302**
**US-A- 4 415 729**

(73) Proprietor: **PHILLIPS PETROLEUM COMPANY**
**5th and Keeler**
**Bartlesville Oklahoma 74004(US)**

(72) Inventor: **Nesheiwat, Afif Michael**
**1557 SE Kings Dr. No. 1216**
**Bartlesville Oklahoma 74006(US)**

(74) Representative: **Geissler, Bernhard, Dr. jur., Dipl.-Phys. et al**
**Patent- und Rechtsanwälte**
**Bardehle . Pagenberg . Dost . Altenburg . Frohwitter . Geissler & Partner**
**Postfach 86 06 20**
**D-81633 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 311 040 B1

Rank Xerox (UK) Business Services
(3.10/3.09/3.3.3)

## Description

This invention relates to processes for the production of polymers from aromatic compounds. In a broad aspect, this invention relates to processes for the production and recovery of crystalline poly(arylene sulfide) polymers.

A basic process for the production of crystalline poly(arylene sulfide) polymers from polyhalo-substituted aromatic compounds, wherein the halogen atoms attached to ring carbon atoms react with an alkali metal sulfide in a polar organic compound at an elevated temperature, is generally known in the art. Due to a continually growing attractiveness towards thermal plastic polymeric resins, a great amount of work has been completed which resulted in the disclosure of methods for both batch and continuous operations to produce crystalline poly(arylene sulfide)s from polyhalo aromatic compounds having at least two halogen substituents per molecule. Most of the processes for producing crystalline poly(arylene sulfide) resins result in a liquid reaction mixture comprising a liquid-phase polymer and a polar organic solvent. In order for the polymer to be useful in commercial applications, it must first be recovered from the reaction mixture.

One method of recovering the crystalline poly(arylene sulfide) resins from the reaction mixture is by a process referred to as "solvent flash". In this process the solvent component of the reaction mixture is vaporized leaving behind the polymer. The polymer recovered by this process is in the form of a powdery resin. This powdery resin has, among other things, (1) proven to be difficult to filter, (2) resulted in a product that when dried is excessively dusty, (3) necessitated pelletizing the powder for extrusion purposes, and (4) resulted in other problems commonly associated with products of relatively low bulk density.

Increasing the particle size of the powder-like particulate crystalline poly(arylene sulfide) resin recovered by the solvent flash process would alleviate most of the aforementioned problems. Therefore, one object of this invention is to provide a method for recovering particulate crystalline poly(arylene sulfide) resins from a reaction mixture comprising a liquid-phase poly(arylene sulfide) and a polar organic solvent, wherein the particle size distribution of the recovered resins result in improved filterability and reduced dustiness as compared to resins recovered by solvent flashing methods.

Another process used for the recovery of crystalline poly(arylene sulfide) resins from a reaction mixture is the addition of a liquid functioning as a phase separating agent. This liquid should be soluble in the reaction mixture and a nonsolvent of the polymeric resin. When a phase separating liquid is used to recover the polymer from the reaction mixture, the process results in the recovery of a polymer in the form of relatively large, coarse particles. It should be noted, however, that some of these resin particles agglomerate into large chunks and/or adhere onto the internal walls of the polymerization reactor. Therefore, it is another object of this invention to provide a method for recovering particulate crystalline poly(arylene sulfide) from a reaction mixture comprising a liquid-phase poly(arylene sulfide), a polar organic solvent, and water wherein the polymeric particles are uniform in size and do not tend to adhere to each other or to the internal parts of the reaction vessel.

US-A-4 415 729 describes recovering granular poly(arylene sulfide) particles from a reaction mixture using water as a separation agent.

Other aspects, concepts, and objects of this invention will become apparent to those skilled in the art upon reading the following detailed description when considered in light of the accompanying drawing, and the appended claims.

In accordance with this invention, a method as defined in claim 1 is provided for recovering a particulate crystalline poly(arylene sulfide) polymer from a completed polymerization reaction resulting in a liquid reaction mixture comprising a liquid-phase poly(arylene sulfide), a polar organic solvent, and water. Specifically, the liquid reaction mixture is contacted by an amount of a vaporized phase separation agent, at least sufficient to effect a phase separation between the poly(arylene sulfide) and the polar organic solvent. The vaporized phase separation agent is a vapor which, when in its liquid-phase, is characterized as being (1) soluble in the polar organic solvent, (2) a nonsolvent of the poly(arylene sulfide), and (3) able to effect a phase separation between the liquid-phase polymer and the polar organic solvent. A subsequent reduction in the temperature of the liquid reaction mixture, produces a reaction mixture slurry comprising a particulate crystalline poly(arylene sulfide) resin. The polymeric particles, recovered from the reaction mixture slurry, are uniform in size and do not tend to adhere to each other or to the internal parts and walls of the reaction vessel.

In an embodiment, wherein a completed polymerization reaction results in a reaction mixture slurry comprising a particulate crystalline polymeric resin, a polar organic solvent and water, the particulate resin is liquified, to form a liquid reaction mixture. The liquid reaction mixture comprising the liquified poly(arylene sulfide), is contacted by the vaporized phase separation agent described above in amount at least sufficient to effect in a phase separation between the liquid-phase poly(arylene sulfide) and the polar

organic solvent. Subsequently reducing the temperature of the liquid reaction mixture, produces a reaction mixture slurry comprising a particulate crystalline poly(arylene sulfide) resin. The polymeric particles, recovered from the reaction mixture slurry, are uniform in size and do not tend to adhere to each other or to the internal parts and walls of the reaction vessel.

A more complete appreciation of the invention and many attendant advantages thereof will be readily obtained as the same becomes better understood by reference to the following detailed description when considered in connection with the accompanying figure briefly described below.

FIGURE 1 is a schematic representation of a process for producing a polymerization reaction mixture comprising a poly(arylene sulfide) polymer, a polar organic solvent, and water and for recovering a crystalline polymer by the process of this invention.

In one embodiment, the process of the present invention is suitable for use in recovering crystalline poly(arylene sulfide) resins produced by any method that results in a reaction mixture comprising a liquid-phase poly(arylene sulfide) and a polar organic solvent.

In another embodiment, the process of this invention is also suitable for use in recovering crystalline poly(arylene sulfide) resins produced by any method that results in a reaction mixture comprising a slurry of particulate polymeric resin and a polar organic solvent, wherein the particulate resin can be placed into its liquid-phase without degrading the polymer.

Examples of processes that will produce reaction mixtures which can be treated by the process of this invention are those wherein polyhalo-substituted aromatic compounds are reacted with sulfur-containing reactants in a polar organic solvent, optionally with polymerization modifying compounds, either in batch or continuous operations. Reaction mixtures, wherein the components of which are premixed to form complexes before all of the components are brought together under polymerization conditions, can also be used.

In general, the arylene sulfide polymers, treated by the process of this invention, are phenylene sulfide polymers. Specifically, the process of this invention can be used to recover crystalline phenylene sulfide polymers selected from the group comprising poly(phenylene sulfide), poly(phenylene sulfide ketone), and poly(phenylene sulfide diketone).

This invention provides a method for converting a liquid-phase poly(arylene sulfide) polymer in a liquid reaction mixture into relatively large, coarse particles which are uniform in size, are readily separable from the other components of the reaction mixture, and do not tend to adhere to each other or to the internal parts or walls of the polymerization reactor. Specifically, by contacting the liquid reaction mixture comprising the liquid-phase poly(arylene sulfide) polymer with an amount of a suitable phase separation agent which is at least sufficient to effect a phase separation between the polar organic solvent and the liquid-phase poly(arylene sulfide), a particulate polymer, having the improved characteristics, can be recovered.

At the completion of the polymerization reaction, the crystalline poly(arylene sulfide) can be present in the polymerization reaction mixture in either a liquid-phase or a solid-phase. When the completed polymerization reaction results in a liquid reaction mixture comprising a liquid-phase poly(arylene sulfide), the vaporized separating agent can be added without any modification of the mixture. An example of when this would occur includes, but is not limited to, the synthesis of poly(phenylene sulfide).

However, when the completed polymerization reaction results in a reaction mixture slurry comprising a particulate poly(arylene sulfide) resin, the particulate resin must be liquified prior to the addition of the vaporized separating agent. One method of liquifying a particulate crystalline poly(arylene sulfide) slurried in a completed polymerization reaction mixture includes, but is not limited to, heating the reaction mixture slurry to an elevated temperature. It is noted, that since the particulate crystalline poly(arylene sulfide) is in the presence of a solvent, the elevated temperature of the subsequent liquification process need not necessarily exceed the melting point of the resin. Another method of liquifying the particulate crystalline poly(arylene sulfide) resin is to add additional solvent to the reaction mixture slurry. Depending upon the type and amount of additional solvent being added, it may also be necessary to elevate the temperature of this reaction mixture in order to liquify the particulate polymeric resin. Examples of when a polymer liquification process would need to occur include, but are not limited to, the synthesis of either poly(arylene sulfide ketone)s, or poly(arylene sulfide diketone)s.

The vaporized separating agent, suitable for use by the process of this invention, can be any one which, when in its liquid-phase, has the following characteristics: (1) soluble in the polar organic solvent used in the reaction mixture; (2) a nonsolvent of the crystalline poly(arylene sulfide); and (3) able to effectuate a phase separation between the liquid-phase polymer and the remaining liquid components of the reaction mixture. Examples of suitable liquids which can be vaporized include, but are not limited to, the following: water; paraffinic hydrocarbons; higher boiling alcohols; higher boiling ethers; and the like, and mixtures thereof. Vaporized water (i.e., steam) is the presently preferred separating agent.

In some instances, the polymerization reaction results in an amount of a phase separating agent present in the reaction mixture. Depending upon the polymerization process and the poly(arylene sulfide) being synthesized, the amount of phase separating agent present in a reaction mixture can range from an undetectable amount to an amount which is at least sufficient to effect in a phase separation between the liquid-phase poly(arylene sulfide) and the polar organic solvent.

The molar sum of (1) any phase separating agent present in the liquid reaction mixture, at the completion of the polymerization reaction and (2) the vaporized phase separating agent subsequently added to the liquid reaction mixture, must be at least equal to the moles of poly(arylene sulfide) polymer present in the liquid reaction mixture. In general, the molar ratio of the vaporized separating agent to the moles of poly(arylene sulfide) present in the liquid reaction mixture ranges from about 0.1:1 to about 10:1, depending upon the amount of phase separating agent present at the end of the polymerization reaction. Preferably, the molar ratio of the vaporized separating agent to the moles of poly(arylene sulfide) present in the reaction mixture ranges from about 0.5:1 to about 5:1, more preferably, from about 1:1 to about 3:1.

After the vaporized separating agent has been added to the liquid reaction mixture, the temperature of the liquid reaction mixture is lowered to the range in which the liquid-phase poly(arylene sulfide) resin solidifies. This transitional temperature differs with the type of polymer produced, and is readily determined by one skilled in the art. For example, for a poly(phenylene sulfide) polymer, its transition temperature is 210 °C ± 11.1 °C (410 °F ± 20 °F). Described in another way, when the temperature of the liquid reaction mixture comprising the liquid-phase poly(phenylene sulfide) is decreased from its polymerization reaction temperature (i.e., from 218.3 °C (425 °F) to 273.8 °C (525 °F)) to a temperature below the resin's transition temperature (i.e., from 221.1 °C (430 °F) to 198.9 °C (390 °F)), the liquid poly(phenylene sulfide) will begin to solidify.

Poly(phenylene sulfide ketone) resins have a polymerization reaction temperature generally ranging from 232.2 °C (450 °F) to 287.8 °C (550 °F). As stated earlier, the synthesis of poly(phenylene sulfide ketone) results in a reaction mixture slurry comprising a particulate resin. To practice this invention, the particulate resin must first be liquified. The presently preferred method of liquifying poly(phenylene sulfide ketone)s is by heating the reaction mixture slurry to a temperature in the range from 287.8 °C (550 °F) to 315.6 °C (600 °F).

After the resin has been liquified, the temperature of the new liquid reaction mixture is lowered to a point below the resin's transitional temperature. The liquid to solid phase transitional temperature of poly-(phenylene sulfide ketone) is 246.1 °C ± 13.9 °C (475 °F ± 25 °F). Therefore, when using the above liquification means, to solidify liquid-phase poly(phenylene sulfide ketone) from the liquid reaction mixture, the temperature of the liquid reaction mixture is decreased from a temperature ranging from 287.8 °C (550 °F) to 315.6 °C (600 °F) to a temperature below the resins transition temperature (i.e., from 260 °C (500 °F) to 246.1 °C (475 °F)).

Poly(phenylene sulfide diketone) resins have a reaction temperature generally ranging from 232.2 °C (450 °F) to 273.9 °C (525 °F). As stated earlier, the synthesis of poly(phenylene sulfide diketone) results in a reaction mixture slurry comprising a particulate resin. To practice this invention, the particulate resin must first be liquified. The presently preferred method of liquifying poly(phenylene sulfide diketone)s is to heat the reaction mixture slurry to a temperature in the range from 343.3 °C (650 °F) to 371.1 °C (700 °F). After the resin has been liquified, the temperature of the new liquid reaction mixture is lowered to a point below the resin's transitional temperature. The liquid to solid phase transitional temperature of poly(phenylene sulfide diketone) is 301.7 °C ± 13.9 °C (575 °F ± 25 °F). Therefore, when using the above liquification means, to solidify liquid-phase poly(phenylene sulfide diketone) from the liquid reaction mixture, the temperature of the liquid reaction mixture is decreased from a temperature ranging from 343.3 °C (650 °F) to 371.1 °C (700 °F) to a temperature below the resin's transition temperature (i.e., from 315.6 °C (600 °F) to 287.8 °C (550 °F)).

In general, the crystalline poly(arylene sulfide) polymers treated by the process of this invention are produced by contacting under polymerization conditions, a dihalobenzene with a sulfur source and a polar organic solvent. Optionally, components such as polyhalo-aromatic compounds, having more than two halogen substituents per molecule, and/or polymerization modifying compounds such as alkali metal carboxylates or lithium halides can also be added. Some of the more common components used in producing these reaction mixtures are listed below.

For example, the dihalobenzenes which can be employed are often p-dihalo compounds represented by the formula

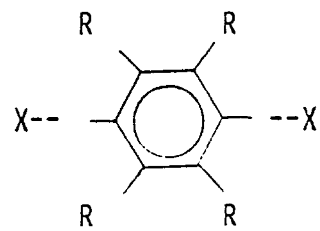

wherein each X is selected from the group comprising chlorine, bromine, and iodine, and each R is selected from the group comprising hydrogen and hydrocarbyl in which the hydrocarbyl can be an alkyl, cycloalkyl, or aryl radical or combination thereof such as alkaryl, aralkyl, or the like, wherein the total number of carbon atoms in each molecule is within the range of 6 to 24, with the proviso that, in at least 50 mole percent of the p-dihalobenzene employed, R is hydrogen.

Some specific examples of p-dihalobenzenes which can be employed include, but are not limited to the following: p-dichloro-benzene; p-dibromobenzene; p-diiodobenzene; 1-chloro-4-bromobenzene; 1-chloro-4-iodobenzene; 1-bromo-4-iodobenzene; 2,5-dichlorotoluene; 2,5-dichloro-p-xylene; 1-ethyl-4-isopropyl-2,5-dibromobenzene; 1,2,4,5-tetramethyl-3,6-dichlorobenzene; 1-butyl-4-cyclohexyl-2,5-dibromobenzene; 1-hexyl-3-dodecyl2,5-dichlorobenzene; 1-octadecyl-2,5-diiodobenzene; 1-phenyl-2-chloro-5-bromobenzene; 1-(p-tolyl)-2,5-dibromobenzene; 1-benzyl-2,5-dichloro-benzene; 1-octyl-4-(3-methyl-cyclopentyl)-2,5-dichlorobenzene; and the like, and mixtures thereof.

Polyhalo-aromatic compounds having more than two halogen substituents per molecule which can optionally be employed. These compounds can be represented by the formula

$R'X'^n$

wherein each X' is selected from the group comprising chlorine and bromine, preferably chlorine; n is an integer from 3 to 6; and R' is a polyvalent aromatic radical of valence n which can have up to 4 methyl substituents. The total number of carbon atoms in R' are within the range of 6 to 16.

Some specific examples of polyhalo-aromatic compounds having more than two halogen substituents per molecule include, but are not limited to the following: 1,2,3-trichlorobenzene; 1,2,3,5-tetrabromobenzene; hexachlorobenzene; 1,3,5-trichloro-2,4,6-trimethylbenzene; 2,2',4,4'-tetrachlorobiphenyl; 2,2',6,6'-tetrabromo-3,3',5,5'-tetramethylbiphenyl; 1,2,3,4-tetrachloronaphthalene; 1,2,4-tribromo-6-methylnaphthalene; and the like, and mixtures thereof.

Examples of alkali metal sulfides which can optionally be employed include, but are not limited to: lithium sulfide; sodium sulfide; potassium sulfide; rubidium sulfide; cesium sulfide; and mixtures thereof. Preferably, the alkali metal sulfide is used as a hydrate or as an aqueous mixture. If desired, the alkali metal sulfide can be prepared as an aqueous solution by the reaction of an alkali metal hydroxide with an alkali metal bisulfide in aqueous solution.

The alkali metal carboxylates which can optionally be employed can be represented by the formula

$R''CO_2M$

wherein R'' is a hydrocarbyl radical selected from the group comprising alkyl, cycloalkyl, and aryl, and combinations thereof such as alkaryl, aralkyl, and the like. The number of carbon atoms in said R'' is within the range from 1 to 20; and M is an alkali metal selected from the group comprising lithium, sodium, potassium, rubidium, and cesium. If desired, the alkali metal carboxylate can also optionally be employed as a hydrate, as a solution, or as a dispersion in water.

Specific examples of alkali metal carboxylates which can be employed include, but are not limited to: lithium acetate; sodium acetate; potassium acetate; lithium propionate; sodium propionate; lithium 2-methylpropionate; rubidium butyrate; lithium valerate; sodium valerate; cesium hexanoate; lithium heptanoate; lithium 2-methyl-octanoate; potassium dodecanoate; rubidium 4-ethyltetradecanoate; sodium octanoate; sodium heneicosanoate; lithium cyclohexanecarboxylate; sodium 3-methylcyclopentanecarboxylate; potassium cyclohexylacetate; potassium benzoate; lithium benzoate; sodium benzoate; potassium m-toluate; lithium phenylacetate; sodium 4-phenylcyclohexanecarboxylate; potassium p-tolylacetate; lithium 4-ethylcyclohexylacetate; and the like, and mixtures thereof.

If used, the amount of alkali metal carboxylate added is generally in the range from 0.05 to 4, preferably from 0.1 to 2 gram-moles carboxylate/gram-mole of p-dihalobenzene

Examples of the lithium halides which can optionally be employed include, but are not limited to, the following: lithium chloride; lithium bromide; lithium iodide; and mixtures thereof.

Examples of the alkali metal hydroxides which can optionally be employed include, but are not limited to, the following: lithium hydroxide; sodium hydroxide; potassium hydroxide; rubidium hydroxide; cesium hydroxide; and mixtures thereof.

The polar organic solvents useful in the preparation of polymers which can be recovered by the process of this invention are those which are solvents for both, the polyhalo aromatic compounds and the alkali metal sulfides used. Examples of such polar organic solvents include, but are not limited to, the following: amides, including lactams; and sulfones. Specific examples of such polar organic solvents include hexamethylphosphoramide; tetramethylurea; N,N'-ethylene-dipyrrolidone; N-methyl-2-pyrrolidone (NMP); pyrrolidone; caprolactam; N-ethylcaprolactam; sulfolane; N,N-dimethylacetamide; low molecular weight polyamides; and the like. The polar organic solvent presently preferred is N-methyl-2-pyrrolidone (NMP).

To further demonstrate the operation of the present invention, a polymerization reaction process is described below. The polymerization process is illustrated by FIGURE 1 which is a schematic representation of a process for producing and recovering poly(phenylene sulfide) by the process of this invention.

Referring now to Figure 1, aqueous solutions of a base (e.g. NaOH) and an alkali metal sulfide (e.g. NaSH) are fed into stirred vessel 1 through lines 3 and 5, respectively. A polar organic solvent (e.g. NMP) is fed through line 7 into stirred vessel 1 to flush all of the material from vessel 1 through line 9 into stirred vessel 11, which serves as a dehydration/polymerization reactor.

An alkali metal carboxylate (e.g. sodium acetate) and a second charge of a polar organic solvent (e.g. NMP) are fed through lines 17 and 13, respectively, into line 15 which introduces these components into the dehydration/polymerization vessel 11. The contents of vessel 11 are then heated to a temperature sufficient to dehydrate the mixture therein. Rising vapors, passing through line 21, are fractionated in the distillation column 23. Condensed water vapor is passed through line 25 to be collected in dehydration accumulator 27.

After the dehydration process, the distillation column 23 is isolated from vessel 11 by the closing of valves 22 and 24. The monomer (e.g. p-dichlorobenzene) is then added through line 29 into line 15, which introduces the monomer into vessel 11. The mixture within vessel 11 is then heated to a temperature sufficient to effect the polymerization of the monomeric material.

After the polymerization reaction is completed, a vaporized separating agent (e.g. steam) is introduced into vessel 11 through line 2. It should be noted that vaporization of the liquid separating agent can be accomplished through any suitable process. One example of such a suitable process includes, but is not limited to, passing the liquid separating agent through a heating means.

After a sufficient amount of the vaporized separating agent, which is at least sufficient to effect the separation of the liquid polymer from the remaining liquid components in vessel 11, is added, the liquid reaction mixture is vigorously stirred by agitator 33. The internal temperature of vessel 11 is then reduced so that the now separated, liquid polymer gradually comes out of solution and begins to solidify. After the internal temperature of vessel 11 has been lowered to a point below the transitional temperature of the polymer, the result is a reaction mixture slurry comprising large, uniformly-sized particulate polymer. This reaction mixture slurry is then removed from vessel 11 through line 28. The particulate resin is then recovered from the reaction mixture slurry, washed, filtered, and dried using conventional methods. The polymeric resin recovered by the process of this invention does not tend to agglomerate into large chunks or adhere to the internal walls or parts of vessel 11.

This invention will be more fully understood from the following examples. These examples are only intended to demonstrate select embodiments of the invention.

## Example I

This example demonstrates the recovery of a crystalline poly(arylene sulfide) resin by the novel process of this invention comprising the steps of adding a vaporized separating agent to a hot completed polymerization mixture, cooling the polymerization mixture, and filtering the mixture to recover the crystalline poly(arylene sulfide) resin.

The poly(arylene sulfide) used in this example is a poly(phenylene sulfide (PPS) which had been prepared, recovered, and dried in an earlier process. Specifically, the PPS resin was initially prepared by reacting 38.6 kg (85 lbs) of 50 wt. percent NaOH, 47.2 kg (104 lbs) of 59 wt. percent NaSH, 127.3 $dm^3$ (28 gals) N-methyl-pyrrolidone (NMP), and 74.4 kg (164 lbs) p-dichlorobenzene (p-DCB), under the polymerization conditions disclosed in U.S. Patent No. 3,354,129. The resulting polymeric resin had a melt flow rate, as determined by ASTM D1238, of approximately 15,000 g/10 min.

To simulate reaction conditions, a 250-gram sample of the above PPS resin was redissolved by being charged into a one gallon polymerization reactor along with 1000 ml NMP, 60 grams sodium acetate (NaOAc) and approximately 45 ml water. The reactor was then purged with nitrogen gas while being heated to 260°C (500°F.). The internal temperature of the reactor was held at 260°C (500°F.) for approximately one-half hour. Henceforth, this PPS liquid reaction mixture will be referred to as Mixture 1.

In a separate one half liter vaporization cylinder, 300 ml of water were charged. The cylinder was then sealed and heated to 254°C (473°F), resulting in an internal pressure of 4.14 MPa (600 psig).

Steam was charged, over a 10-minute period, from the top of the one half liter sealed vaporization cylinder into the polymerization reactor containing Mixture 1. Upon charging the steam into the polymerization reactor, the internal temperature of the reactor dropped from 258°C (496°F) to 256°C (493°F), while the internal pressure increased from 0.97 MPa to 2.07 MPa (140 psig to 300 psig). After the 10-minute charging period, the steam to the reactor was terminated and its contents permitted to cool. The amount of vaporized water (i.e., steam) charged into the reactor and a visual qualitative observation of the reactor's contents after cooling the reactor are recorded in Table I.

For the purpose of further demonstrating the effectiveness of the present invention, three additional PPS liquid reaction mixtures (i.e., Mixtures 2-4, inclusive) were prepared. These mixtures were prepared by using 250-gram samples of the same PPS polymer made above. These PPS samples were also redissolved to form hot reaction mixtures in accordance with the same procedure set out for Mixture 1. The only difference between the preparation of Mixtures 2-4 and that of Mixture 1 was the separating agent employed. Specifically, for Mixture 2, 200 ml of water at 25°C at atmospheric pressure was used as the separating agent. For Solution 3, 300 ml of water at 249°C at 3.79 MPa (550 psig) was used as the separating agent. For Solution 4, no separating agent was added. The results observed, when the different separating agents were employed, are recorded in Table I.

**Table I:**

**Effects of Using a Vaporized Liquid as a Separating Agent**

| Mixture No. | Separating Agent: Type | Separating Agent: Charged Amt. (ml) | Separating Agent: Temp. (°C) | Reaction (Start)[a]: Temp. (°C) | Reaction (Start)[a]: Press. (psig) MPa | Reaction (End)[b]: Temp. (°C) | Reaction (End)[b]: Press. (psig) MPa | Temp. Change[c] (°C) | Observation |
|---|---|---|---|---|---|---|---|---|---|
| 1 | Steam | 140[d] | 254[e] | 260 | 0.97 (140) | 258 | 2.07 (300) | 2 | Uniform particles; little coating on coils |
| 2 (comp.) | Water | 200 | 25 | 260 | 1.03 (150) | 234 | 1.90 (275) | 26 | Non-uniform particles; coating on coils |
| 3 (comp.) | Water | 300 | 249[f] | 260 | 1.03 (150) | 238 | 2.21 (320) | 22 | Non-uniform particles; coating on coils |
| 4 (comp.) | None | - | - | 260 | 0.90 (130) | - | - | - | Powder |

[a] Reactor conditions prior to adding any separating agent.

[b] Reactor conditions after the addition of the separating agent.

[c] Change in the internal temperature of the reactor after the addition of the separating agent.

[d] Charged amount determined by subtracting the amount of water remaining in the charging cylinder after cooling (i.e., 160 ml) from the initial amount of water added to the charging cylinder (i.e., 300 ml).

[e] Steam temperature determined by using The American Society of Mechanical Engineers (ASME) Steam Tables after allowing 0.10 MPa (14.7 psi) for atmospheric pressure and a charging cyclinder internal pressure of 4.14 MPa (600 psig).

[f] Water temperature determined by using ASME Steam Tables allowing 14.7 psi for atmospheric pressure and a charging cyclinder internal pressure of 3.79 MPa (550 psig).

The results recorded in Table I demonstrate that, without the addition of any separating agent (i.e. Mixture 4), the resulting polymer is in the form of a powder. Moreover, while the use of a liquid separating agent, such as water (i.e. Mixture 2), results in the formation of particles, these particles are generally not uniform in size and tend to adhere to one another as well as to the internal walls of the reactor. A comparison of Mixture 3 with Mixture 1 demonstrates that even when the liquid separating agent is

introduced at a temperature similar to that of the vaporized separating agent, the use of the liquid agent still results in the agglomeration of polymeric particles. As can clearly be seen by the data of Table I, when a vaporized separating agent, such as steam, is employed, the result is a polymer having uniform particle size and little, if any, product adheres to the internal walls and parts of the reactor.

Example II

This example demonstrates the recovery of a crystalline poly(arylene sulfide) resin by the novel process of this invention comprising the steps of adding a vaporized separating agent to a hot completed polymerization mixture, cooling the polymerization mixture, and filtering the mixture to recover the crystalline poly(arylene sulfide) resin.

The liquid reaction mixture of this example was prepared by redissolving a poly(phenylene sulfide) (PPS) resin, modified by an alkali metal carboxylate, which had been prepared, recovered, and dried in an earlier process. Specifically, the modified PPS resin was initially prepared by reacting, 31.3 kg (69 lbs) of 50 wt. percent NaOH, 40.4 kg (89 lbs) of 58 wt. percent NaSH, 12.7 kg (28 lbs) of sodium acetate (NaOAc), 163.7 $dm^3$ (36 gals) of N-methylpyrrolidone (NMP), and 60.3 kg (133 lbs) p-dichlorobenzene (p-DCB), under the polymerization conditions disclosed in U.S. Patent No. 3,919,177. The resulting polymeric resin had a melt flow rate, as determined by ASTM D1238, of approximately 300 g/10 min.

To simulate reaction conditions, a 250-gram sample of the above modified PPS resin was redissolved by being charged into a one-gallon (4.55 $dm^3$) polymerization reactor along with 1000 ml NMP, 60 grams sodium acetate (NaOAc) and approximately 50 ml water. The reactor was then purged with nitrogen gas while being heated to 260 °C (500 °F). The internal temperature of the reactor was held at 260 °C (500 °F) for approximately one-half hour. Henceforth, this modified PPS reaction mixture will be referred to as Mixture 5.

In a separate one-half liter vaporization cylinder, 300 ml of water were charged. The cylinder was then sealed and heated to 254 °C (450 °F), resulting in an internal pressure of 4.14 MPa (600 psig).

Steam was charged, over a 10-minute period, from the top of the one-half liter sealed vaporization cylinder into the polymerization reactor containing Mixture 5. Upon charging the steam into the polymerization reactor, the internal temperature of the reactor dropped from 260 °C (500 °F) to 253 °C (457 °F), while the internal pressure increased from 1.03 MPa to 1.45 MPa (150 psig to 210 psig). After the 10-minute charging period, the steam to the reactor was terminated and its contents permitted to cool. The amount of vaporized water charged into the reactor and a visual qualitative observation of the reactor's contents after cooling are recorded in Table II.

For the purpose of demonstrating the effectiveness of the present invention, two additional modified PPS reaction mixtures (i.e., Mixtures 6 and 7, inclusive), taken from the same modified resin batch prepared above, were also redissolved into separate liquid reaction mixtures in accordance with the same procedure set out for Mixture 5. The only significant difference between the preparation of Mixtures 6 and 7 and that of Mixture 5 was the separating agent employed. Specifically, for Mixture 6, 150 ml of water at 25 °C (77 °F) at atmospheric conditions, were used as the separating agent. For Solution 7, no separating agent was added. The results observed, when the different separating agents were employed, are recorded in Table II.

Table II:

Effects of Using a Vaporized Liquid as a Separating Agent for a Modified Polymer

| Mixture No. | Quenching Media | | | Reaction (Start)[a] | | Reaction (End)[b] | | Temp. Change[c] (°C) | Observation |
|---|---|---|---|---|---|---|---|---|---|
| | Type | Charged Amt. (ml) | Temp. (°C) | Temp. (°C) | Press. (psig) MPa | Temp. (°C) | Press. (psig) MPa | | |
| 5 | Steam | 45[d] | 254[e] | 260 | 1.03 (150) | 253 | 1.45 (210) | 7 | Uniform particles; no coating on coils |
| 6 (Comp.) | Water | 150 | 25 | 260 | 1.03 (150) | 242 | 2.07 (300) | 18 | Non-uniform particles; coating on coils |
| 7 (Comp.) | None | - | - | 260 | 0.97 (140) | - | - | - | Powder |

a See footnote "a" of Table I.

b See footnote "b" of Table I.

c See footnote "c" of Table I.

d Charged amount determined by subtracting the amount of water remaining in the charging cylinder after cooling (i.e., 280 ml) from the initial amount of water added to the charging cylinder (i.e., 325 ml).

e See footnote "e" of Table I.

The results recorded in Table II demonstrate that, without the addition of any separating agent (i.e., Mixture 7), the polymer is in the form of a powder. However, while the use of a liquid separating agent (i.e., Mixture 6), such as water, results in the formation of particles, these particles are generally not uniform in size and tend to adhere to one another as well as to the internal walls of the reactor. As can clearly be seen by the data of Table II, when a vaporized separating agent (i.e., Mixture 5), such as steam, is employed, the

result is a polymer having uniform particle size and little, if any, product adheres to the internal walls and parts of the reactor.

Example III

This example demonstrates the recovery of a crystalline poly(arylene sulfide) resin by the novel process of this invention. The crystalline poly(arylene sulfide) used to demonstrate the effectiveness of the invention in this example is poly(phenylene sulfide ketone) (PPSK).

As in the earlier examples, the liquid reaction mixture was prepared by redissolving a poly(arylene sulfide), in this instance PPSK, which had been prepared, recovered, and dried in an earlier process. Specifically, a sample of a PPSK resin was initially prepared by reacting, 250-grams of dichlorobenzophenone (DCBP), 1200 ml N-methylpyrrolidone (NMP), 40 grams NaOH, 95-grams NaSH, and 58 ml water, in a nitrogen atmosphere at 250 °C (452 °F) for 3 hours under a pressure of 200 psig. The resulting polymer had a melt flow rate, as determined by ASTM D1238, of approximately 9 g/10 min.

To simulate reaction conditions, and result in a liquid reaction mixture a first 225-gram sample of the above PPSK resin was redissolved by being charged into a 4.55 $dm^3$ (one-gallon) polymerization reactor along with 1200 ml NMP and 75 ml water. The reactor was then purged with nitrogen gas while being heated to 300 °C (572 °F). The internal temperature of the reactor was held at 300 °C (572 °F) for approximately 15 minutes. Henceforth, this PPSK liquid reaction mixture will be referred to as Mixture 8.

In a separate one-half liter vaporization cylinder, 375 ml of water were charged. The cylinder was then sealed and heated to 254 °C (459 °F), resulting in an internal pressure of 4.14 MPa (600 psig).

Steam was introduced into the polymerization reactor, containing Mixture 8, through a series of six separate charges from the top of the one-half liter sealed vaporization cylinder. The change in reaction temperature and pressure, after each steam charge, is recorded in Table III.

After the sixth charge of steam, the contents of the reactor were permitted to cool. The total amount of vaporized water charged into the reactor over all six charges and a visual qualitative observation of the reactor's contents after cooling are recorded in Table III.

A second 193-gram sample of the above PPSK resin was then charged to another 4.55 $dm^3$ (one-gallon) polymerization reactor along with 1,000 ml NMP and 75 ml water. The reactor was purged with nitrogen while being heated to 300 °C. The internal temperature of the reactor was held at 300 °C. for approximately 15 minutes. Henceforth, this PPSK reaction mixture will be referred to as Mixture 9.

In a separate one-half liter vaporization cylinder, 375 ml of water were charged. The cylinder was then sealed and heated to 254 °C (459 °F), resulting in an internal pressure 4.14 MPa (600 psig).

Steam was introduced into the polymerization reactor containing Mixture 9 through a series of four separate charges, from the top of the one half liter sealed vaporization cylinder. The change in reaction temperature and pressure, for each steam charge, is recorded in Table III.

After the fourth charge of steam, the contents of the reactor were permitted to cool. The total amount of vaporized water charged into the reactor over all four charges and a visual qualitative observation of the reactor's contents after cooling are recorded in Table III.

A third 200-gram sample of the above PPSK resin was charged to yet another 4.55 $dm^3$ (one-gallon) polymerization reactor along with 1,000 ml NMP and 54 ml water. The reactor was purged with nitrogen gas while being heated to 300 °C. The internal temperature of the reactor was held at 300 °C (542 °F) for approximately 15 minutes. Henceforth, this PPSK reaction mixture will be referred to as Mixture 10.

In a separate one-half liter vaporization cylinder, 375 ml of water were charged. The cylinder was then sealed and heated to 254 °C (459 °F), resulting in an internal pressure of 4.14 MPa (600 psig).

Steam was introduced into the polymerization reactor, containing Mixture 10, through a series of three separate charges, from the top of the one-half sealed vaporization cylinder. The change in reaction temperature and pressure, after each steam charge, is recorded in Table III.

After the third charge of steam, the contents of the reactor were permitted to cool. The total amount of vaporized water charged into the reactor over all three charges and a visual qualitative observation of the reactor's contents after cooling are recorded in Table III.

For the purpose of demonstrating the effectiveness of the present invention, a fourth PPSK resin sample was redissolved into a liquid reaction mixture in accordance with the same procedure set out for Mixture 10. The only significant difference between the preparation of Mixture 10 and that of Mixture 11 was the separating agent employed. Specifically, 125 ml of water at 25 °C (77 °F) at atmospheric pressure was used as the separating agent for Mixture 11. The results observed when water (as opposed to steam) was used as the separating agent are recorded in Table III.

Table III:

Effects of Using a Vaporized Liquid as a Separating Agent for a Modified Polymer

| Mixture No. | Quenching Media Type | Quenching Media Charged Amt. (ml) | Quenching Media Temp. (°C) | Steam Charge No. | Reaction (Start)[a] Temp. (°C) | Reaction (Start)[a] Press. (psig) MPa | Reaction (End)[b] Temp. (°C) | Reaction (End)[b] Press. (psig) MPa | Temp. Change[c] (°C) | Observation |
|---|---|---|---|---|---|---|---|---|---|---|
| 8 | Steam | 130[d] | 254 | 1 | 305 | 1.79 (260) | 305 | 2.07 (300) | 0 | Uniform Particles; no coating on coils |
| | | | | 2 | 305 | 2.07 (300) | 303 | 2.24 (325) | 2 | |
| | | | | 3 | 295 | 2.14 (310) | 294 | 2.41 (350) | 1 | |
| | | | | 4 | 298 | 2.34 (340) | 284 | 2.48 (360) | 4 | |
| | | | | 5 | 280 | 2.41 (350) | 278 | 2.48 (360) | 2 | |
| | | | | 6 | 272 | 2.34 (340) | 271 | 2.41 (350) | 1 | |
| 9 | Steam | 125 | 254 | 1 | 282 | 1.65 (240) | 281 | 2.07 (300) | 1 | Uniform particles; no coating on coils |
| | | | | 2 | 270 | 1.79 (260) | 270 | 2.07 (300) | 0 | |
| | | | | 3 | 268 | 2.07 (300) | 268 | 2.28 (330) | 0 | |
| | | | | 4 | 270 | 2.28 (330) | 270 | 2.41 (350) | 0 | |
| 10 | Steam | 75 | 254 | 1 | 277 | 1.38 (200) | 272 | 1.90 (275) | 5 | Uniform particles; no coating on coils |
| | | | | 2 | 264 | 1.72 (250) | 262 | 2.07 (300) | 2 | |
| | | | | 3 | 259 | 1.90 (275) | 259 | 2.07 (300) | 0 | |
| 11 | Water (Comp.) | 125 | 25 | 1 | 300 | 1.84 (267) | 277 | 3.10 (450) | 23 | Non-uniform particles; coating on coils |

[a] See footnote "a" of Table I.

[b] See footnote "b" of Table I.

[c] See footnote "c" of Table I.

[d] Charged amount determined by subtracting the amount of water remaining in the charging cylinder after cooling (i.e., 245 ml) from the initial amount of water added to the charging cylinder (i.e., 375 ml).

[e] See footnote "e" of Table I.

The results recorded in Table III demonstrate that, while the use of a liquid separating agent, such as water, results in the formation of particles, (i.e., Mixture 11) these particles are generally not uniform is size and tend to adhere to one another as well as to the internal walls of the reactor. As can be clearly seen by the data of Table III, when vaporized separating agents, such as steam (i.e., Mixtures 8-10) are employed, the result is a polymer having uniform particle size and little, if any, product adheres to the internal walls

and parts of the reactor.

## Claims

1. A method for recovering a particulate crystalline poly(arylene sulfide) from a completed polymerization reaction resulting in a liquid reaction mixture comprising a liquid-phase poly(arylene sulfide), a polar organic solvent, and water, said method comprising:
   (a) contacting said liquid reaction mixture with a vaporized separation agent in an amount at least sufficient to effect a phase separation of said liquid-phase poly(arylene sulfide) component from said polar organic solvent component, said vaporized separation agent being a vapor which, when in its liquid phase, is soluble in said polar organic solvent, a nonsolvent for poly(arylene sulfide), and able to effect a phase separation between said liquid-phase poly(arylene sulfide) and said polar organic solvent,
   wherein the molar sum of any phase separating agent present in said liquid reaction mixture at the completion of said polymerization reaction, and said vaporized separation agent subsequently added to said liquid reaction mixture is at least equal to the moles of said poly(arylene sulfide) present in said liquid reaction mixture,
   (b) reducing the temperature of said liquid reaction mixture sufficiently to solidify said liquid-phase poly(arylene sulfide) to form a reaction mixture slurry comprising a particulate crystalline poly-(arylene sulfide), and
   (c) recovering said particulate crystalline poly(arylene sulfide) from said reaction mixture slurry.

2. A method according to claim 1 wherein said poly(arylene sulfide) is poly(phenylene sulfide).

3. A method according to claim 1 wherein alkali metal carboxylate is present in said liquid reaction mixture.

4. A method according to claim 1 wherein an alkali metal carboxylate is used in the preparation of said particulate crystalline poly(arylene sulfide).

5. A method for recovering a particulate crystalline poly(arylene sulfide) from a completed polymerization reaction resulting in a reaction mixture slurry comprising a particulate poly(arylene sulfide), a polar organic solvent, and water, said method comprising:
   (a) converting said particulate crystalline poly(arylene sulfide) to a liquid-phase poly(arylene sulfide) to form a liquid reaction mixture,
   (b) contacting said liquid reaction mixture with a vaporized separation agent in an amount at least sufficient to effect a phase separation of said liquid-phase poly(arylene sulfide) component from said polar organic solvent component, said vaporized separation agent being a vapor which, when in its liquid phase, is soluble in said polar organic solvent, a nonsolvent for poly(arylene sulfide), and able to effect a phase separation between said liquid-phase poly(arylene sulfide) and said polar organic solvent, wherein the molar sum of any phase separating agent present in said liquid reaction mixture at the completion of said polymerization reaction, and said vaporized separation agent subsequently added to said liquid reaction mixture is at least equal to the moles of said poly(arylene sulfide) present in said liquid reaction mixture,
   (c) reducing the temperature of said liquid reaction mixture sufficiently to solidify said liquid-phase poly(arylene sulfide) to form a reaction mixture slurry comprising a particulate crystalline poly-(arylene sulfide), and
   (d) recovering said particulate crystalline poly(arylene sulfide) from said reaction mixture slurry.

6. A method according to claim 1 or 5 wherein the molar ratio of said vaporized separation agent subsequently added to said liquid-phase poly(arylene sulfide) ranges from 0.1:1 to 10:1, in particular from 0.5:1 to 5:1, preferably from 1:1 to 3:1.

7. A method according to claim 1 or 5 wherein said vaporized separation agent is selected, in its liquid form, from water, paraffinic hydrocarbons, higher boiling alcohols, and higher boiling ethers, in particular wherein it is water.

8. A method according to claim 5 wherein said poly(arylene sulfide) is poly(arylene sulfide ketone).

9. A method according to claim 8 wherein said poly(arylene sulfide ketone) is poly(phenylene sulfide ketone).

10. A method according to claim 5 wherein said poly(arylene sulfide) is poly(arylene sulfide diketone).

11. A method according to claim 10 wherein said poly(arylene sulfide diketone) is poly(phenylene sulfide diketone).

**Patentansprüche**

1. Verfahren zur Gewinnung eines teilchenförmigen kristallinen Poly-(arylensulfids) aus einer abgeschlossenen Polymerisationsreaktion, die zu einem flüssigen Reaktionsgemisch führt, das ein Poly-(arylensulfid) in flüssiger Phase, ein polares organisches Lösungsmittel und Wasser umfaßt, wobei das Verfahren folgende Stufen umfaßt:
(a) Kontaktieren des flüssigen Reaktionsgemisches mit einem verdampften Trennmittel in einer Menge, die mindestens ausreicht, um eine Phasentrennung des Poly-(arylensulfid)-Bestandteils in flüssiger Phase von dem polaren organischen Lösungsmittelbestandteil zu bewirken, wobei es sich bei dem verdampften Trennmittel um einen Dampf handelt, der, wenn er in flüssiger Phase vorliegt, in dem polaren organischen Lösungsmittel löslich ist, ein Nichtlösungsmittel für das Poly-(arylensulfid) ist und fähig ist, eine Phasentrennung zwischen dem Poly-(arylensulfid) in flüssiger Phase und dem polaren organischen Lösungsmittel zu bewirken,
wobei die molare Summe beliebiger Phasentrennmittel, die in dem Reaktionsgemisch bei Abschluß der Polymerisationsreaktion vorhanden sind, und des verdampften Trennmittels, das anschließend zu dem flüssigen Reaktionsgemisch gegeben wird, mindestens gleich der molaren Menge des Poly(arylensulfids) ist, das in dem flüssigen Reaktionsgemisch vorhanden ist;
(b) ausreichende Verringerung der Temperatur des flüssigen Reaktionsgemisches, um das Poly-(arylensulfid) in flüssiger Phase unter Bildung einer Reaktionsgemischaufschlämmung, die ein teilchenförmiges kristallines Poly-(arylensulfid) umfaßt, zu verfestigen; und
(c) Gewinnung des teilchenförmigen kristallinen Poly-(arylensulfids) aus der Reaktionsgemischaufschlämmung.

2. Verfahren nach Anspruch 1, wobei es sich bei dem Poly-(arylensulfid) um Poly-(phenylensulfid) handelt.

3. Verfahren nach Anspruch 1, wobei ein Alkalimetallcarboxylat in dem flüssigen Reaktionsgemisch vorhanden ist.

4. Verfahren nach Anspruch 1, wobei ein Alkalimetallcarboxylat bei der Herstellung des teilchenförmigen kristallinen Poly-(arylensulfids) verwendet wird.

5. Verfahren zur Gewinnung eines teilchenförmigen kristallinen Poly-(arylensulfids) aus einer abgeschlossenen Polymerisationsreaktion, die zu einer Reaktionsgemischaufschlämmung führt, die ein teilchenförmiges Poly-(arylensulfid), ein polares organisches Lösungsmittel und Wasser umfaßt, wobei das Verfahren folgende Stufen umfaßt:
(a) Umwandlung des teilchenförmigen kristallinen Poly-(arylensulfids) in ein Poly-(arylensulfid) in flüssiger Phase, um ein flüssiges Reaktionsgemisch zu bilden;
(b) Kontaktieren des flüssigen Reaktionsgemisches mit einem verdampften Trennmittel in einer Menge, die mindestens ausreicht, um eine Phasentrennung des Poly-(arylensulfid)-Bestandteils in flüssiger Phase von dem polaren organischen Lösungsmittelbestandteil zu bewirken, wobei es sich bei dem verdampften Trennmittel um einen Dampf handelt, der, wenn er in flüssiger Phase vorliegt, in dem polaren organischen Lösungsmittel löslich ist, ein Nichtlösungsmittel für das Poly-(arylensulfid) ist und fähig ist, eine Phasentrennung zwischen dem Poly-(arylensulfid) in flüssiger Phase und dem polaren organischen Lösungsmittel zu bewirken;
wobei die molare Summe beliebiger Phasentrennmittel, die in dem flüssigen Reaktionsgemisch beim Abschluß der Polymerisationsreaktion vorhanden sind, und dem verdampften Trennmittel, das anschließend zu dem flüssigen Reaktionsgemisch gegeben wird, mindestens gleich der molaren Menge des Poly-(arylensulfids) ist, das in dem flüssigen Reaktionsgemisch vorhanden ist;

(c) ausreichende Verringerung der Temperatur des flüssigen Reaktionsgemisches, um das Poly-(arylensulfid) in flüssiger Phase unter Bildung einer Reaktionsgemischaufschlämmung, die ein teilchenförmiges kristallines Poly-(arylensulfid) umfaßt, zu verfestigen; und
(d) Gewinnung des teilchenförmigen kristallinen Poly-(arylensulfids) aus der Reaktionsgemischaufschlämmung.

**6.** Verfahren nach einem der Ansprüche 1 oder 5, wobei das molare Verhältnis des verdampften Trennmittels, das anschließend zugegeben wird, zu dem Poly-(arylensulfid) in flüssiger Phase im Bereich von 0,1:1 bis 10:1, insbesondere von 0,5:1 bis 5:1 und vorzugsweise von 1:1 bis 3:1 beträgt.

**7.** Verfahren nach Anspruch 1 oder 5, wobei das verdampfte Trennmittel in seiner flüssigen Form unter Wasser, Paraffinkohlenwasserstoffen, höhersiedenden Alkoholen und höhersiedenden Ethern ausgewählt ist, wobei es sich insbesondere um Wasser handelt.

**8.** Verfahren nach Anspruch 5, wobei es sich bei dem Poly-(arylensulfid) um Poly-(arylensulfidketon) handelt.

**9.** Verfahren nach Anspruch 8, wobei es sich bei dem Poly-(arylensulfidketon) um Poly-(phenylensulfidketon) handelt.

**10.** Verfahren nach Anspruch 5, wobei es sich bei dem Poly-(arylensulfid) um Poly-(arylensulfiddiketon) handelt.

**11.** Verfahren nach Anspruch 10, wobei es sich bei dem Poly-(arylensulfiddiketon) um Poly-(phenylensulfiddiketon) handelt.

## Revendications

**1.** Un procédé pour récupérer un poly(sulfure d'arylène) cristallin particulaire à partir d'une réaction de polymérisation terminée donnant un mélange réactionnel liquide comprenant une phase liquide de poly(sulfure d'arylène), un solvant organique polaire et de l'eau, ledit procédé comprenant les étapes consistant à :
(a) mettre en contact ledit mélange réactionnel liquide avec un agent de séparation vaporisé selon une quantité au moins suffisante pour effectuer une séparation de phase dudit composant de poly-(sulfure d'arylène) en phase liquide à partir dudit solvant organique polaire, ledit agent de séparation vaporisé étant une vapeur qui, lorsqu'elle est dans sa phase liquide, est soluble dans ledit solvant organique polaire, un agent non solvant pour le poly(sulfure d'arylène) et capable d'effectuer une séparation de phase entre ledit poly(sulfure d'arylène) en phase liquide et ledit solvant organique polaire,
où la somme molaire de tout agent de séparation de phase présent dans ledit mélange réactionnel liquide à la fin de ladite réaction de polymérisation et ledit agent de séparation vaporisé ajouté subséquemment audit mélange réactionnel liquide est au moins égale aux moles dudit poly(sulfure d'arylène) présent dans ledit mélange réactionnel liquide,
(b) réduire la température dudit mélange réactionnel liquide suffisamment pour solidifier ledit poly-(sulfure d'arylène) en phase liquide pour former une bouillie de mélange réactionnel comprenant un poly(sulfure d'arylène) cristallin particulaire et,
(c) récupérer ledit poly(sulfure d'arylène) cristallin particulaire de ladite bouillie de mélange réactionnel.

**2.** Un procédé selon la revendication 1, dans lequel ledit poly(sulfure d'arylène) est du poly(sulfure de phénylène).

**3.** Un procédé selon la revendication 1, dans lequel du carboxylate de métal alcalin est présent dans ledit mélange réactionnel liquide.

**4.** Un procédé selon la revendication 1, dans lequel un carboxylate de métal alcalin est utilisé dans la préparation dudit poly(sulfure d'arylène) cristallin particulaire.

**5.** Un procédé pour récupérer un poly(sulfure d'arylène) cristallin particulaire à partir d'une réaction de polymérisation terminée donnant une bouillie de mélange réactionnel comprenant un poly(sulfure d'arylène) particulaire, un solvant organique polaire et de l'eau, ledit procédé comprenant les étapes consistant à :
(a) transformer ledit poly(sulfure d'arylène) cristallin particulaire en un poly(sulfure d'arylène) en phase liquide pour former un mélange réactionnel liquide,
(b) mettre en contact ledit mélange réactionnel liquide avec un agent de séparation vaporisé selon une quantité au moins suffisante pour effectuer une séparation de phase dudit composant de poly-(sulfure d'arylène) en phase liquide à partir dudit solvant organique polaire, ledit agent de séparation vaporisé étant une vapeur qui, lorsqu'elle est dans sa phase liquide est soluble dans ledit solvant organique polaire, un agent non solvant pour le poly(sulfure d'arylène) et capable d'effectuer une séparation de phase entre ledit poly(sulfure d'arylène) en phase liquide et ledit solvant organique polaire,
où la somme molaire de tout agent de séparation de phase présent dans ledit mélange réactionnel liquide à la fin de ladite réaction de polymérisation et ledit agent de séparation vaporisé ajouté subséquemment audit mélange réactionnel liquide est au moins égale aux moles dudit poly(sulfure d'arylène) présent dans ledit mélange réactionnel liquide,
(c) réduire la température dudit mélange réactionnel liquide suffisamment pour solidifier ledit poly-(sulfure d'arylène) en phase liquide pour former une bouillie de mélange réactionnel comprenant un poly(sulfure d'arylène) cristallin particulaire, et
(d) récupérer ledit poly(sulfure d'arylène) cristallin particulaire de ladite bouillie ce mélange réactionnel.

**6.** Un procédé selon l'une des revendications 1 ou 5, dans lequel le rapport molaire dudit agent de séparation vaporisé ajouté subséquemment audit poly(sulfure d'arylène) en phase liquide est compris dans la gamme de 0,1:1 à 10:1, notamment de 0,5:1 à 5:1, de préférence de 1:1 à 3:1.

**7.** Un procédé selon la revendication 1 ou 5 dans lequel ledit agent de séparation vaporisé est choisi, sous sa forme liquide, à partir de l'eau, des hydrocarbures paraffiniques, des alcools à point d'ébullition supérieur et des éthers à point d'ébullition supérieur, en paticulier dans lequel il s'agit de l'eau.

**8.** Un procédé selon la revendication 5, dans lequel ledit poly(sulfure d'arylène) est un poly(sulfure d'arylène-cétone).

**9.** Un procédé selon la revendication 8, dans lequel ledit poly(sulfure d'arylène-cétone) est le poly(sulfure de phénylène-cétone).

**10.** Un procédé selon la revendication 5, dans lequel ledit poly(sulfure d'arylène) est le poly(sulfure d'arylène-dicétone).

**11.** Un procédé selon la revendication 10, dans lequel ledit poly(sulfure d'arylène-dicétone) est le poly-(sulfure de phénylène-dicétone).

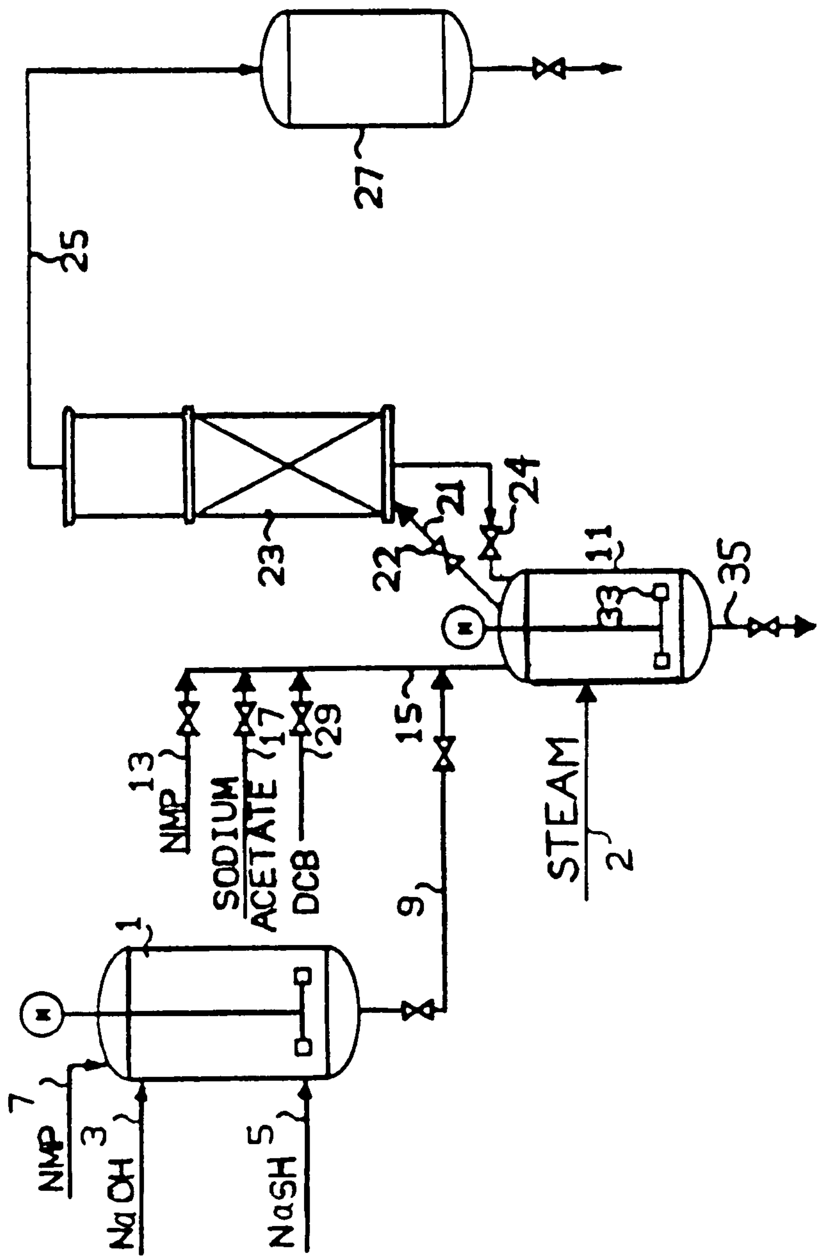
NMP
NaOH
NaSH
SODIUM
ACETATE
DCB
STEAM
1
2
3
5
7
9
11
13
15
17
21
22
23
24
25
27
29
33
35